(19) Europäisches Patentamt
European Patent Office
Office européen des brevets

(11) **EP 0 571 566 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(21) Anmeldenummer: **92922584.5**

(22) Anmeldetag: **04.11.1992**

(51) Int Cl.6: **G01S 7/52**, G01S 15/10

(86) Internationale Anmeldenummer:
**PCT/DE92/00917**

(87) Internationale Veröffentlichungsnummer:
**WO 93/10469 (27.05.1993 Gazette 1993/13)**

(54) **EINRICHTUNG ZUR ABSTANDSMESSUNG MIT ULTRASCHALL**

ULTRASONIC DISTANCE-MEASURING EQUIPMENT

DISPOSITIF POUR LA MESURE DE DISTANCES PAR ULTRASONS

(84) Benannte Vertragsstaaten:
**DE FR GB IT**

(30) Priorität: **11.11.1991 DE 4136958**
**18.03.1992 DE 4208595**

(43) Veröffentlichungstag der Anmeldung:
**01.12.1993 Patentblatt 1993/48**

(73) Patentinhaber: **ROBERT BOSCH GMBH**
**70442 Stuttgart (DE)**

(72) Erfinder:
• **ROMES, Roman**
**D-7251 Friolzheim (DE)**
• **DAMBACHER, Karl-Heinz**
**D-72760 Reutlingen (DE)**

(56) Entgegenhaltungen:
**WO-A-83/03478** **US-A- 4 905 208**
**US-A- 4 975 889**

• **IBM TECHNICAL DISCLOSURE BULLETIN Bd. 18, Nr. 10, März 1976, SS 3210-3212; S. CROW: 'Comparator with adaptive minimum threshold'**

**Beschreibung**

Stand der Technik

Die Erfindung betrifft eine Einrichtung zur berührungslosen Abstandsmessung mit Ultraschall nach dem Oberbegriff des Anspruchs 1.

Es ist bekannt, berührungslose Abstandsmessungen mit Hilfe von Ultraschall-Laufzeitmessungen durchzuführen. Dabei wird insbesondere im Zusammenhang mit Einrichtungen zur Warnung vor einer Kollision bei Kraftfahrzeugen, wie sie aus der noch nicht veröffentlichten Patentanmeldung P 41 20 697 bekannt sind, beschrieben, wie von einem Schallwandler ein kurzes Ultraschallsignal ausgesandt und bei Vorhandensein eines Hindernisses an diesem reflektiert und vom Schallwandler wieder empfangen wird. Aus der Laufzeit wird die Entfernung zwischen dem Schallwandler und dem reflektierenden Hindernis berechnet.

Da die Höhe des reflektierten Signales nicht nur von der Höhe des ausgesandten Signales, sondern auch von der Qualität des Reflektors abhängt, ergeben sich bei der Auswertung des Echosignals Probleme.

Eine Möglichkeit, das Echosignal zur Erzeugung einer Zeitmarke zu verwenden, besteht darin, das Echosignal in einem Schwellwertschalter mit einer Schaltschwelle zu vergleichen, so daß am Ausgang des Schwellwertschalters dann ein Signal entsteht, wenn das Echosignal die Schwelle überschreitet.

Die Festlegung der Höhe der Schaltschwelle muß so erfolgen, daß sie einerseits hoch genug ist, um unerwünschte Fremdechos zu unterdrücken, andererseits sollte auch bei einem stark absorbierenden Reflektor des Echosignal die Schaltschwelle übersteigen, da anderenfalls keine Anzeige möglich ist.

Aus der US-PS 4 975 889 ist eine Vorrichtung zur Abstandsmessung mit Ultraschall bekannt, bei der ein elektroakustischer Wandler impulsförmige Ultraschallsignale aussendet und die reflektierten Signale wieder empfängt und elektrische Signale umwandelt. Die zugehörige Aufbereitungsschaltung umfaßt eine Schwellwertstufe mit einem zeitlich variablen Schwellwert, der mit der Zeit abnimmt. Aus der Messung der Zeitabstände zwischen dem ausgesandten Signal und Schwellwertüberschreitungen durch das reflektierte Signal wird der Abstand zwischen dem elektroakustischen Wandler und dem die Ultraschallsignale reflektierenden Reflektor bestimmt. Eine Anpassung der Schwellwerthöhe an zuvor registrierte reflektierte Signale wird nicht durchgeführt.

Aus der US-PS 4 905 208 ist eine weitere Vorrichtung zur Abstandsmessung mit Ultraschall bekannt, bei der ein Ultraschallsensor Ultraschallimpulse aussendet und die reflektierten Signale wieder empfängt und in elektrische Signale wandelt. Diese bekannte Vorrichtung wird beispielsweise zur Tiefenmessung in Schiffen eingesetzt und weist einen Verstärker mit variabler Verstärkung auf, der die vom Empfänger gelieferten Signale vor der Weiterverarbeitung verstärkt. Eine Veränderung der Verstärkung in Abhängigkeit von zuvor registrierten reflektierten Signalen wird nicht durchgeführt.

Aus der WO 83/03478 ist ein Verfahren bzw. eine Einrichtung zur Bestimmung eines Relativabstandes mit Hilfe von Ultraschallsignalen bekannt. Dabei werden Ultraschallsignale ausgesandt, die vom Reflektor reflektiert werden. Aus der Laufzeit zwischen Aussendung und Empfang der Signale wird in üblicher Weise der zu messende Abstand ermittelt. Zur Erhöhung der Genauigkeit bei der Auswertung wird eine bekannte Referenzstrecke gebildet und die Laufzeit der Signale durch diese Referenzstrecke wird ebenfalls gemessen und zur Kompensation von äußeren Einflüssen auf die Ultraschallausbreitungsbedingungen herangezogen.

Vorteile der Erfindung

Die erfindungsgemäße Einrichtung mit den kennzeichnenden Merkmalen des Hauptanspruchs hat gegenüber den bekannten Einrichtungen den Vorteil, daß entweder keine feste Schaltschwelle verwendet wird, sondern eine Schaltschwelle, deren Höhe abhängig von den zu verarbeitenden Echosignalen bzw. von vorhergehenden Echosignalen veränderbar ist, oder daß die Verstärkung der Echosignale in Abhängigkeit von vorhergehenden Echosignalen veränderbar ist.

In einer weiteren vorteilhaften Ausgestaltung der Erfindung wird die Höhe des Echosignales durch Veränderung der Intensität des ausgesandten Signales in Abhängigkeit von den zuvor erhaltenen Echosignalen etwa konstant gehalten und kann damit mit einem festen Schwellwert verglichen werden.

Die Beeinflussung der Intensität des ausgesandten Signales wird erreicht, indem der Ultraschallwandler zur Auswertung der Impulse während einer veränderbaren Zeit angeregt wird, wobei diese Zeit, die als Torzeit bezeichnet wird, aufgrund folgender Überlegungen bestimmt wird:

Da die ausgesandten Ultraschallsignale im allgemeinen kurze Pulspakete sind, mit etwa vier bis sechs Maxima und gleich vielen Minima und da die Hüllkurve des Echosignals im allgemeinen dieselbe Hüllkurvenform aufweist wie das ausgesandte Sinal, ist es möglich, durch Auswertung der Hüllkurvenform ein Maß für die erforderliche Veränderung der Schaltschwelle bzw. der Verstärkung zu erhalten. In vorteilhafter Weise wird dabei die erforderliche Veränderung durch Messung einer bestimmten von der Intensität abhängigen Zeit ermittelt, wobei eine erste Methode darin besteht, daß die Zeit gemessen wird, die zwischen dem ersten Überschreiten der Schaltschwelle durch das Echosignal und dem letzten Überschreiten vergeht. Diese Zeit ist abhängig von der Höhe des Echosignales und läßt sich daher besonders vorteilhaft zur Schwellwertveränderung verwenden.

Da die Torzeit nicht beliebig kurz gemacht werden kann, kann das Ausgangssignal des Ultraschallwandlers, also das ausgesandte Signal, nicht beliebig gedämpft werden. Durch Festlegung zweier kurzer Torzeiten, deren Abstand geeignet gewählt wird, kann eine besonders starke Dämpfung des Ausgangssignales erhalten werden, wenn die in der zweiten Torzeit erfolgte Anregung die während der ersten Torzeit erfolgte Anregung zumindest teilweise kompensiert, damit läßt sich in vorteilhafter Weise eine Bereichserweiterung in Richtung Verkleinerung des ausgesandten Signales erzielen.

Zeichnung

Ausführungsbeispiele der Erfindung sind in der Zeichnung anhand mehrerer Figuren dargestellt und werden in der nachfolgenden Beschreibung näher erläutert. Dabei zeigen im einzelnen: Figur la eine erste und Figur 1b eine zweite schematische Anordnung der Meßapparatur, Figur lc eine Ergänzung zu Figur la und Figur ld eine weitere Ausgestaltung der Meßanordnung. Figur 2 zeigt den zeitlichen Verlauf des ausgesandten Signales sowie des empfangenen Echosignales, einschließlich einer Schaltschwelle, Figur 3 den Verlauf des Echosignales über der Zeit T mit den für die Auswertung wesentlichen Zeiten, Figur 4 eine mögliche Regeleinrichtung und die Figuren 5 und 6 zwei Oszillogramme zur Auswertung mit einer schwingenden Membran. Figur 7 zeigt grob schematisch einen Ultraschallwandler und in Figur 8 sind Beispiele für ausgesandte Signale dargestellt, die vom Ultraschallwandler bei verschiedenen pulsförmigen Anregungen abgegeben werden, dabei sind sowohl gemessene als auch berechnete Signale abgebildet.

Beschreibung des Ausführungsbeispiels

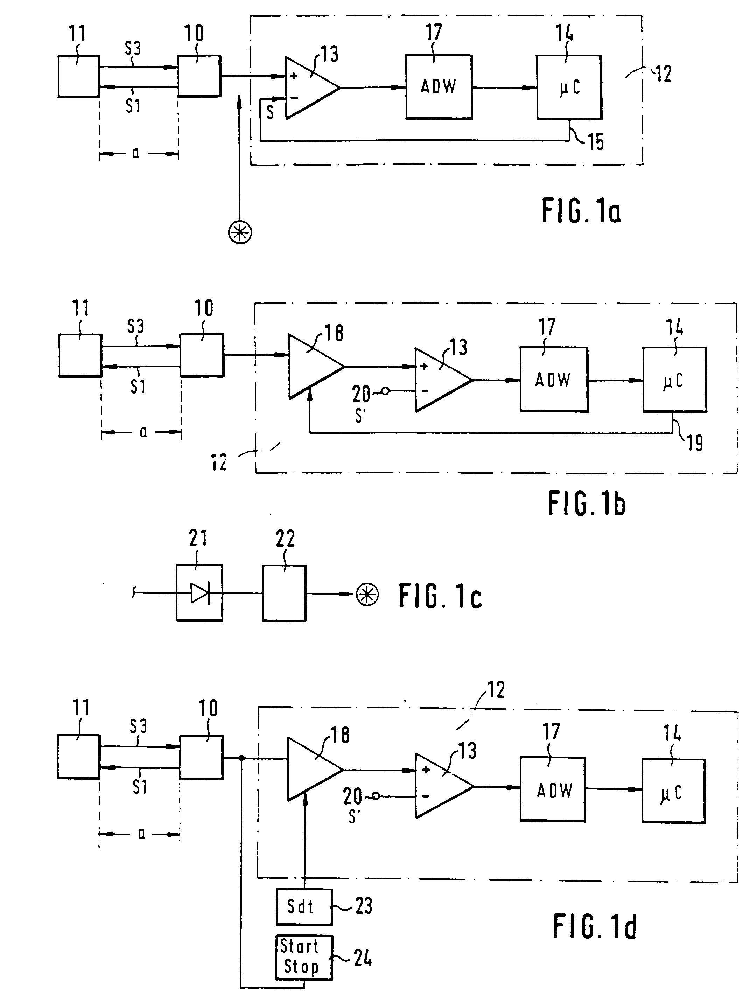

In Figur 1a bis d ist mit 10 der Ultraschall-Wandler bezeichnet, in dem die ausgesandten Signale S1 erzeugt werden, die zum Reflektor 11 gelangen und von dort reflektiert werden und als Echosignal S3 wieder zum Ultraschall-Wandler gelangen.

Im Ultraschall-Wandler 10 werden die Echosignale in elektrische Signale gewandelt, die in einer nachfolgenden Auswerteeinrichtung 12 zur Bestimmung des Abstandes a zwischen dem Ultraschall-Wandler 10 und dem Reflektor 11 verwertet werden. Der Aufbau der Auswerteeinrichtung 12 ist je nach Auswerteprinzip unterschiedlich, bei dem in Figur la dargestellten Ausführungsbeispiel ist als wesentliches Bauelement ein Schwellwertschalter 13 vorgesehen, dessen nicht invertierendem Eingang (+) das Echosignal zugeführt wird, während an seinem invertierenden Eingang (-) ein veränderbarer Schwellwert anliegt und eine variable Schaltschwelle bildet.

Der Ausgang des Schwellwertschalters 13 ist über einen A/D-Wandler 17 mit einem Mikrocomputer 14 verbunden, der über eine Leitung 15 den am invertierenden Eingang des Schwellwertschalters 13 anliegenden Schwellwert S beeinflussen kann.

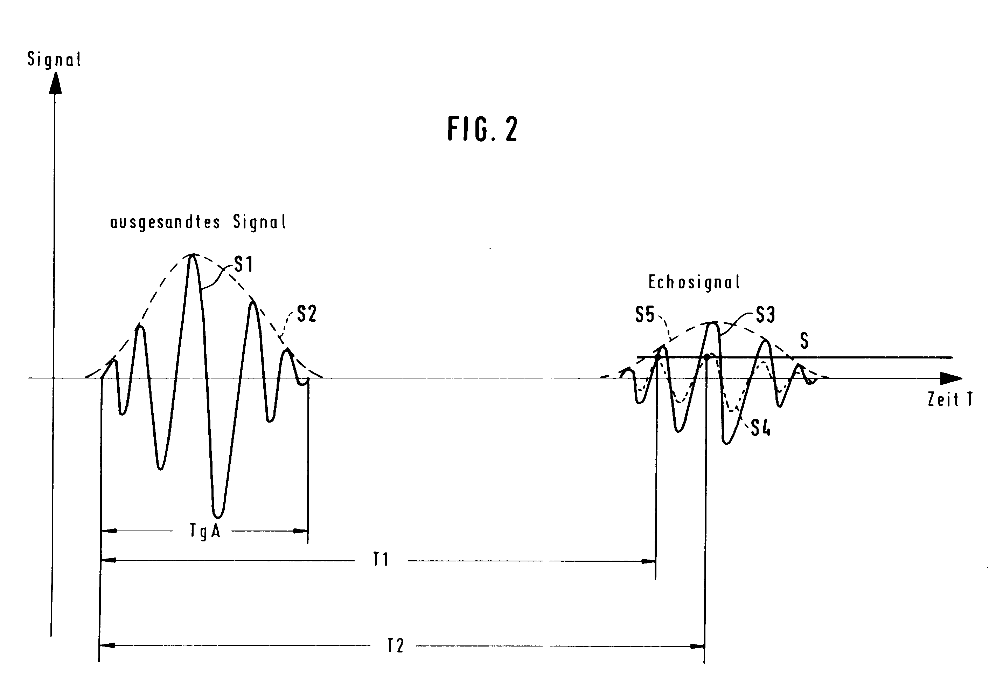

In Figur 2 ist das ausgesandte Signal S1 und das Echosignal über der Zeit T aufgetragen, dabei ist zu erkennen, daß das ausgesandte Signal aus einem Pulspaket mit mehreren Maxima und Minima besteht, wobei die Pulsverteilung eine glockenförmige Hüllkurve aufweist. Das ausgesandte Signal selbst ist mit S1, die Hüllkurve mit S2 bezeichnet.

Wird vom Ultraschall-Wandler 10 ein Signal S1 ausgesandt, wird dieser nach einer Zeit T1 vom Reflektor 11, der sich in einem Abstand a befindet, reflektiert und führt zu einem Echosignal S3, dessen Form und Hüllkurve weitgehend der Form bzw. der Hüllkurve des Signales S1 entsprechen, jedoch in ihrer Höhe gedämpft sind.

Je nach Art des Reflektors 11 sowie nach Abstand zwischen Ultraschall-Wandler und Reflektor weist das empfangene Echosignal S3 eine höhere Amplitude auf oder bei schlechter Reflexion eine niedrigere Amplitude, in Figur 2 ist das Echosignal mit niedriger Amplitude mit S4 bezeichnet. Die Hüllkurve S5, die in Figur 2 für das Echosignal S3 aufgetragen ist, ist wie bereits erwähnt, wieder glockenförmig.

Aus dem zeitlichen Abstand zwischen ausgesandtem Signal und Echosignal ist die Ermittlung des Abstandes zwischen dem Ultraschall-wandler 10 und dem Reflektor 11 bei Kenntnis der Ausbreitungsgeschwindigkeit von Ultraschall möglich, es ist jedoch erforderlich, diesen Abstand eindeutig zu definieren, unter Berücksichtigung von sehr unterschiedlichen Echo-Signalhöhen.

Zur Festlegung der Zeit T1 zwischen ausgesandem Signal S1 und Echosignal wird das Echosignal dem Schwellwertschalter 13 zugeführt, der eine Schaltschwelle S aufweist und immer dann, wenn das Echosignal die Schaltschwelle überschreitet, ein Ausgangssignal abgibt, das im A/D-Wandler 17 digitalisiert und im Mikrocomputer ausgewertet wird.

Die Zeitspanne zwischen dem Beginn des ausgesandten Signales S1 und dem ersten Überschreiten der Schaltschwelle durch das Echosignal S3 wird im Mikrocomputer gemessen und wird dann zur Bestimmung des Abstandes zwischen dem Ultraschall-Wandler 10 und dem Reflektor 11 verwendet, wobei aus Figur 2 zu erkennen ist, daß diese Zeit bei einem hohen Echosignal S3 gleich T1 ist und bei einem niedrigeren Echosignal und derselben Schaltschwelle S gleich T2 ist, da dann auch die zweite positive Halbwelle des Echosignales die Schaltschwelle S noch nicht überschreiten kann, sondern erst die dritte positive Halbwelle.

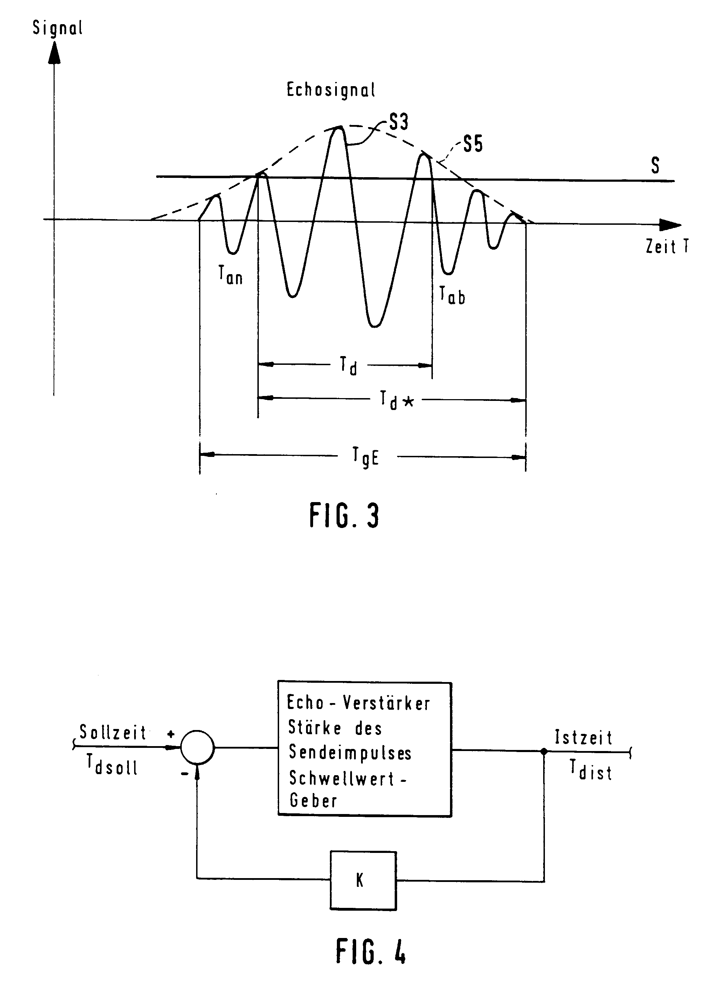

Damit diese unterschiedlichen Zeiten T1 und T2 nicht zu einer Fehlmessung führen, wird beim Ausführungsbeispiel nach Figur 1 die Schaltschwelle in Abhängigkeit vom vorhergehenden Echosignal verändert. Eine Möglichkeit, wie diese Veränderung realisiert sein kann, kann anhand der Figur 3 erläutert werden.

In Figur 3 ist das Echosignal über der Zeit T aufgetragen, außerdem die Schaltschwelle S. Das erste Überschreiten der Schaltschwelle S durch das Signal S3 ist als $T_{an}$ bezeichnet, das letzte Überschreiten $T_{ab}$. Die Differenz zwischen $T_{ab}$ und $T_{an}$ ist als $T_d$ bezeichnet und die Differenz zwischen dem Verschwinden des Signales S3 und der Zeit $T_{an}$ ist als Zeitspanne $T_{d*}$ bezeichnet. Als Gesamtzeit zwischen dem absoluten Beginn des Echosignals S3 und seinem absoluten Ende wird durch die Zeitspanne T g festgelegt.

Die Differenz $T_d$ der beiden Zeiten T ab und T an kann als Maß für die relative Lage der Schaltschwelle zur augenblicklichen Größe des Echosignales dienen. Bei kleinerem Echosignal würde nur das mittlere und damit größte Maximum die Schaltschwelle überschreiten, die Vorderseite des Maximums würde dann $T_{an}$ und die Rückflanke $T_{ab}$ festlegen. Eine wesentlich kürzere Zeitdifferenz $T_d$ als beim Beispiel nach Figur 3 wäre die Folge.

Bei noch kleinerem Echosignal wird die Schaltschwelle überhaupt nicht mehr erreicht bzw. überschritten, eine Zeitdifferenz $T_d$ kann dann nicht mehr festgelegt werden.

Bei vergrößertem Echosignal kann die Zeitdauer $T_d$ fast bis zur Gesamtdauer $T_g$ des Echos anwachsen, da dann bereits das erste und noch das letzte Maximum die Schaltschwelle überschreiten kann. Damit ist ersichtlich, daß die Differenzzeit $T_d$ ein Maß darstellt, die Schaltschwelle in geeigneter Weise an das zu registrierende Echosignal anzupassen, wobei für den Fall, daß $T_d$ nicht festlegbar ist, eine gesonderte Maßnahme zu treffen ist.

Die Wandlung der Differenzzeit $T_d$ in ein verarbeitbares Signal, beispielsweise eine Gleichspannung, erfolgt, wie später noch beschrieben wird, mit Hilfe des Mikrocomputers 14 und ermöglicht eine besonders einfache Verschiebung der Schaltschwelle S, wobei eine Regelung bzw. Schwellenverschiebung so vorgesehen ist, daß die Zeit $T_d$ infolge der Schwellenverschiebung etwa konstant bleibt. Damit wird auch die Zeitmarke $T_{an}$ unabhängig von der Größe des Echosignals S3, es werden auch schwache Echos detektiert und die Zeitmarke erscheint immer an derselben Stelle des Wellenzuges des Signales S3.

Anstelle der Differenzzeit $T_d$ kann auch die Differenzzeit $T_{d*}$ zur Beeinflussung der Schaltschwelle verwendet werden, da auch diese Zeitdauer ein Maß für die relative Lage der Schaltschwelle zur augenblicklichen Größe des Echosignales ist.

Neben einer Beeinflussung der Schaltschwelle mit Hilfe einer aus der Differenzzeit $T_d$ bzw. der Differenzzeit $T_{d*}$ erzeugten Gleichspannung, kann auch die Verstärkung des Echosignales verändert werden, es ist dann eine Auswerteeinrichtung 12 nach Figur 1b vorzusehen.

Bei der Auswerteeinrichtung 12 nach Figur 1b ist zwischen dem Ultraschall-Wandler 10 und dem Schwellwertschalter 13 zusätzlich ein regelbarer Verstärker 18 angeordnet, dessen Verstärkungsfaktor vom Mikroprozessor 14 über eine Leitung 19 verändert werden kann, wobei die Veränderung des Verstärkungsfaktors in Abhängigkeit von der zuvor ermittelten Differenzzeit $T_d$ oder $T_{d*}$ erfolgt und von Mikrocomputer 14 gesteuert wird.

Der Schwellwertschalter 13 weist in diesem Ausführungsbeispiel eine konstante Schaltschwelle S' auf, die an seinem invertierenden Eingang 20 anliegt oder dort zugeführt wird.

Da dem Schwellwertschalter 13 eine geregelte Ausgangsspannung des Verstärkers 18 zugeführt wird, kann die Schaltschwelle S' fest bleiben und trotzdem bleibt die Zeitmarke $T_{an}$ unabhängig von dem vor der Verstärkung registrierten Echosignal. Damit ist auch die Zeit T1 unabhängig von der Höhe des Echosignals.

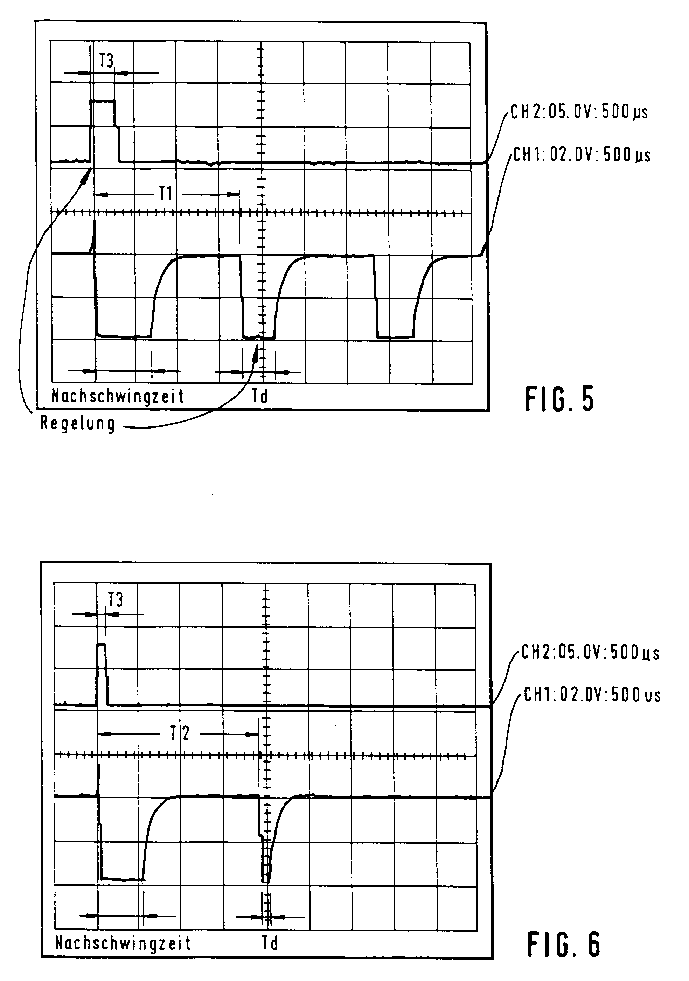

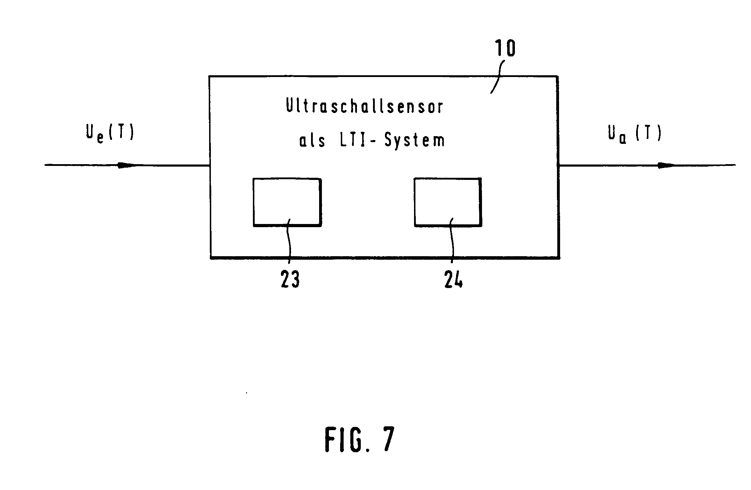

Eine weitere Möglichkeit zur Ausnutzung der Differenzzeit $T_d$ bzw. zur Ausnutzung von $T_{d*}$ zur Beeinflussung der Schaltschwelle S oder des Verstärkungsfaktors K wird anhand des in den Figuren 5 und 6 dargestellten Diagramms für einen Ultraschallwandler 10, dessen Aufbau in Figur 7 grob skizziert ist, erläutert. Dabei ist wesentlich, daß der Ultraschallwandler 10 eine schwingungsfähige Membran 23 aufweist, die mit Hilfe eines Oszillators 24, der mit einer Ultraschallfrequenz schwingt, während vorgebbaren Zeiten, beispielsweise während einer Zeit T3 in Schwingungen versetzt wird und dabei Ultraschallimpulse abgibt, die letztendlich den ausgesandten Signale S1 entsprechen.

Solange die Amplitude der schwingenden Membran einen vorgebbaren Schwellwert überschreitet, wird ein Meßsignal zurückgesetzt. Das Meßsignal ist als Signal CH1 in Abbildung 5 über der Zeit T aufgetragen.

Da die Membran nachschwingt, kann während der Nachschwingzeit kein Echo empfangen werden. Das Echo selbst setzt das Meßsignal nach der Zeitdauer T1 zurück. Die Membran, nun als Empfänger wirkend, schwingt solange der vorgebbare Schwellwert überschritten bleibt, und das Meßsignal bleibt auch zurückgesetzt. Die Zeit, während der das Meßsignal zurückgesetzt bleibt, ist die Zeit $T_d$. Die Regelung, d.h. die Konstanthaltung, der Zeit $T_d$ geschieht nun durch die Beeinflussung der Sendeintensität.

In Figur 4 sind die drei möglichen Maßnahmen, mit deren Hilfe die Zeitmarke $T_{an}$ unabhängig von der Echo-Signalhöhe gemacht wird nochmals verdeutlicht. Dabei wird eine Sollzeit $T_{dsoll}$ vorgegeben, eine Istzeit $T_{dist}$ wird gemessen und mit der Sollzeit $T_{dsoll}$ verglichen. Je nach Vergleichsergebnis wird der Verstärkungsfaktor K des Verstärkers 18 erhöht oder erniedrigt, es wird der Schwellwert S des Schwellwertschalters 13 oder die Höhe des Sende impulses verändert.

Zur Bestimmung der Differenzzeit $T_d$ sind folgende Möglichkeiten anwendbar:

1. Im Mikroprozessor 14 wird die Zahl der Schaltschwellen-Überschreitungen durch das Echosignal S3 gezählt, in Abhängigkeit von dieser Zahl wird dann vom Mikroprozessor die Triggerschwelle in geeigneter Weise beeinflußt oder die Verstärkung des Verstärkers 18 verändert. Dabei wird bei einer größeren Zahl von Schaltschwellen-Überschreitungen, die ein hohes Echosignal andeutet, entweder die Schaltschwelle S erhöht oder der Verstärkungsfaktor K des Verstärkers 18 erniedrigt.

Beide Maßnahmen bewirken, daß eine geeignete Zahl von Überschreitungen, beispielsweise drei unabhängig von der tatsächlichen Höhe des Echosignales S3 auftritt.

Eine weitere Möglichkeit zur Bestimmung der Zeit $T_d$ bzw. zum Erhalt eines von $T_d$ abhängigen Signals besteht darin, daß das Echosignal gleichgerichtet und gefiltert wird, so daß die Hüllkurve des Echosignales erhalten wird. Dazu wird das Echosignal über einen Gleichrichter 21 und ein Filter 22, beispielsweise ein Bandpaßfilter vom Ultraschall-Wandler 10 zur Schwellwertstufe 13 oder zum regelbaren Verstärker 18 geführt. Die Schaltungsanordnung nach Figur 1a ist dann durch die Anordnung nach Figur 1c ergänzt.

Wird weiterhin mit einer Schaltschwelle über eine Start- und Stop-Elektronik 24 ein Integrator 23 gestartet, der beim Unterschreiten dieser Schaltschwelle wieder gestoppt wird, wird als integriertes Signal eine Gleichspannung erhalten, die proportional zu der Zeit ist, während der der Integrator 23 eingeschaltet war. Diese Gleichspannung kann zur Beeinflussung der Verstärkung des Verstärkers 18 verwendet werden. Die Schaltungsanordnung, die zu dieser Bestimmung der Zeit $T_d$ gehört, ist in Figur 1d angegeben.

Bei der in Figur 5 aufgezeichneten Signalverteilung ist die Sendezeit so hoch gewählt, daß auch Zweitechos empfangen werden. In Figur 6 ist ein Beispiel dargestellt, bei dem die Sendezeit durch Änderung des Sollwertes gekürzt wurde, es stellt sich dann eine kürzere Zeit $T_d$ ein, so daß das zweite Echo diese Schwelle nicht mehr überschreitet. Die dabei gemessene Impulslaufzeit T2 nach Figur 6 ist länger als die Impulslaufzeit T1 mit dem Schwellwert nach Figur 5.

In einem weiteren Ausführungsbeispiel der Erfindung, das sich auf die Möglichkeit der Änderung des ausgesandten Signales S1 in Abhängigkeit vom vorhergehenden Echosignal S3 bezieht, wird im Ultraschallwandler 10 das Oszillatorsignal nur zu bestimmten Zeiten weitergeleitet. Der Oszillator schwingt dabei immer, die Weiterleitung des Oszillatorsignales wird mit Hilfe eines Torimpulses ermöglicht, wobei nur während der Dauer des Torimpulsese eine Weiterleitung erfolgt. Die Länge dieses Torimpulses $T_T$ ist maßgeblich für die Länge $T_{gA}$ des ausgesandten Signales S1, sie ist aber auch maßgeblich für die Amplitude des ausgesandten Signales S1. Dabei wächst die Amplitude mit steigender Länge des Torimpulses an, oberhalb einer bestimmten Länge des Torimpulses bleibt die Amplitude jedoch konstant, sie kann also durch Verlängerung der Torzeit nicht mehr erhöht werden.

Die minimale Amplitude wird erhalten, indem der Torimpuls sehr kurz gewählt wird, so daß auch der Oszillator nur einen sehr kurzen Impuls an die Membran anlegt. Da der Torimpuls nicht beliebig kurz gemacht werden kann, läßt sich das vom Ultraschallwandler ausgesandte Signal auch in Richtung minimaler Intensität nicht beliebig verändern, so daß das ausgesandte Signal insgesamt nur innerhalb eines bestimmten Bereiches veränderbar ist.

Eine Vergrößerung dieses variablen Bereiches in Richtung zu noch kleineren Intensitäten des auszusendenden Signales wird bei diesem Ausführungsbeispiel der Erfindung dadurch realisiert, daß der Ultraschallwandler mit zwei getrennten Torimpulsen angesteuert wird, wobei der Abstand dieser Torimpulse so gewählt wird, daß sich der zweite Impuls dämpfend bezüglich des ersten Impulses auswirkt.

Ergibt die Auswertung des Echosignales, daß ein ausgesandtes Signal erforderlich ist, dessen Amplitude durch Verkürzung des Torimpulses nicht mehr weiter weiter verringert werden kann, kann durch Anlegung zweier kurzer Torimpulse eine weitere Verringerung der Amplitude erreicht werden. Die Auswertung der Echosignale und die Festlegung der Pulse erfolgt im µC 14.

Zur Verdeutlichung der Zusammenhänge sei folgendes angemerkt: Wird der Ultraschall-Sensor als ein linear zeitunabhängiges System (LTI-System) betrachtet, läßt sich sein zeitliches Verhalten durch folgende Aussagen charakterisieren: Mit einem Ansteuerimpuls $U_e(\tau)$ als Eingangsfunktion und dem Echo $U_a(\tau)$, das dem Signal S3 entspricht, als Ausgangsfunktion ergibt sich das auftretende Echo durch Faltung der Eingangsfunktion mit der Green'schen-Funktion G(T) des linear zeitunabhängigen Systems. Dies läßt sich durch folgende Funktion darstellen:

$$U_a(T)=U_e(T\text{-}\tau)xG(\tau)d$$

Werden die kurzen Torimpulse näherungsweise als δ-Funktion aufgefaßt, so wird in bekannter Weise die Antwort des Systems auf einen kurzen Eingangsimpuls zur Green'schen-Funktion. Für zwei aufeinanderfolgende Torimpulse wird dann das Faltungssignal zu einer Summe, bei der zeitversetzt zwei Green'sche-Funktionen, die jeweils zu einem δ-Impuls gehören, addiert werden. Je nach Wahl des Abstandes der Torimpulse voneinander tritt dabei eine Verstärkung des Sende-impulses oder aber eine Schwächung auf.

Mit Hilfe eines geeigneten Abstandes kann daher zur Verringerung der Sendeintensität eine Dämpfung erzielt werden, geeignete Abständen lassen sich experimentell oder rechnerisch ermitteln, die Berechnungen laufen beispielsweise in der Recheneinrichtung 14 ab.

In Laborversuchen wurden sowohl Messungen als auch Simulationen durchgeführt. Dabei wurden sehr gute Übereinstimmungen zwischen Simulation und Massung erhalten, es ist damit bewiesen, daß das System in guter Näherung als lineares zeitunabhängiges Systems (LTI-System) behandelt werden kann.

In Figur 7 ist im übrigen schematisch ein Ultraschallsensor dargestellt, dem Eingangsimpulse $U_e(\tau)$

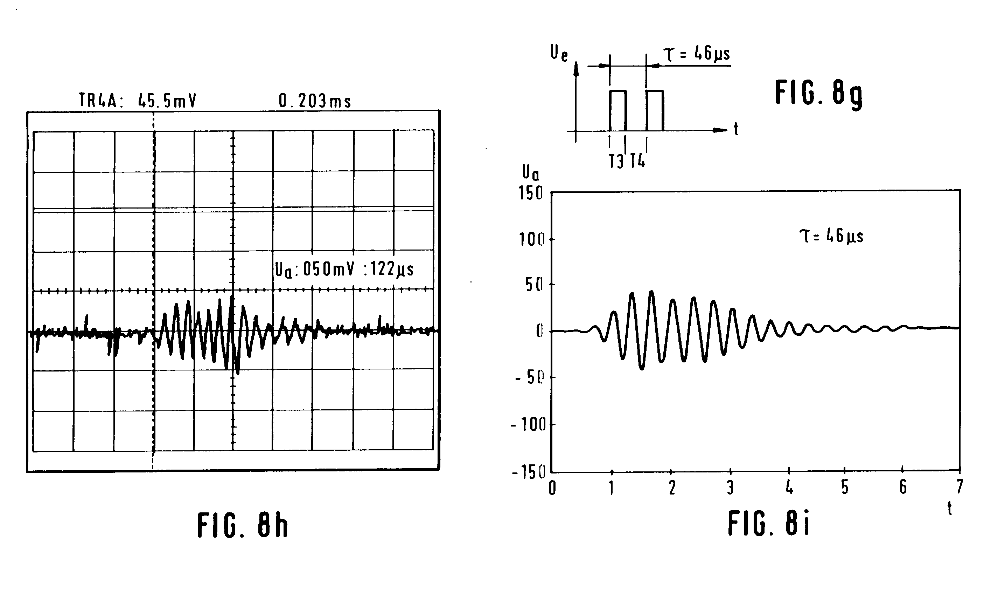

zugeführt werden, deren Dauer gleich T3 ist und deren Abstand wie Figur 8g zu entnehmen ist, T4 entspricht. Am Ausgang des Ultraschallsensors tritt dabei die Ausgangsspannung $U_a(T)$ auf.

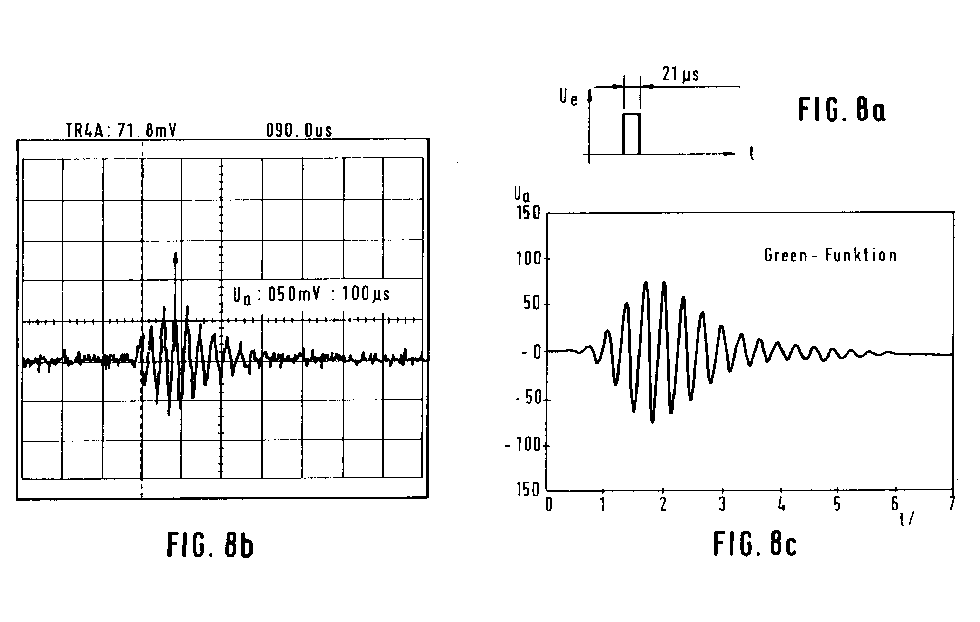

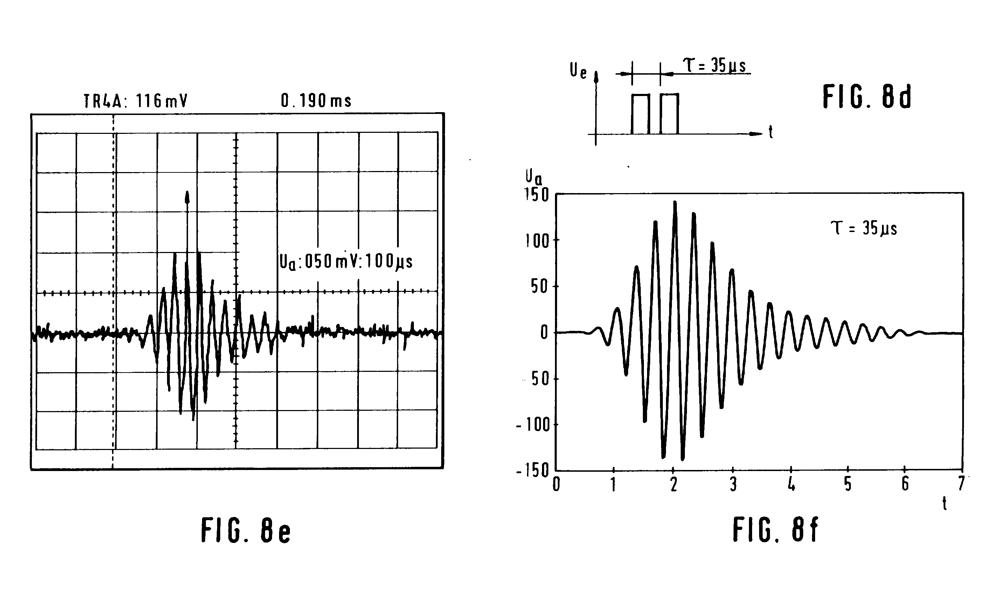

Den Verlauf der Signale zeigt Figur 8, dabei ist der Signalverlauf, der nach Anregung mit Torimpulsen auftritt, für drei Beispiele angegeben, wobei in Figur 8a, d und g die Torimpulse aufgetragen sind, in Figur 8b, e und h die gemessenen und in Figur c, f und i die berechneten Signale aufgetragen sind.

Bei einer Anregung mit einem einzigen Torimpuls möglichst kurzer Dauer nach Figur 8a ergibt sich die in Figur 8b dargestellte Intensitätsverteilung. Diese Verteilung entspricht etwa der in Figur 8c gezeigten rechnerisch ermittelten Greenschen Funktion des LSI-Systems.

Mit der in Figur 8d gezeigten Impulsverteilung ergibt sich eine Intensitätserhöhung, die sowohl experimentell als auch rechnerisch ermittelbar ist und in den Figuren 8e, 8f dargestellt ist.

Die Impulsverteilung bzw. Wahl des Abstandes der Torzeiten nach Figur 8g ergibt eine Abschwächung der Intensitäten, die zugehörigen Verteilungen sind in Figur 8h, 8i dargestellt.

Betrachtet man die maximale Amplitude in Abhängigkeit vom Abstand T4 zwischen den Torimpulsen, ergibt sich ein periodischer Wechsel von Verstärkung und Dämpfung, durch geeignete Wahl des Abstandes T4 läßt sich damit ein weiter Bereich der Signalbeeinflussung darstellen, wobei erfindungsgemäß hautsächlich der Dämpfungsbereich ausgenutzt wird, da der Verstärkungsbereich auch durch Verlängerung der Torzeit erzielbar ist.

## Patentansprüche

1. Einrichtung zur Abstandsmessung mit Ultraschall, mit einem Ultraschall- Wandler (10), der als Sender ein impulsförmiges Signal abgibt und als Empfänger das Echosignal eines im zu messenden Abstand befindlichen Reflektors aufnimmt und das Echosignal in ein elektrisches Signal wandelt, das einer Auswerteschaltung zugeführt wird, wobei die Auswerteschaltung wenigstens einen Schwellwertschalter umfaßt, in dem das elektrische Signal mit einer variablen Schaltschwelle verglichen wird, wobei der Schwellwertschalter bei Überschreiten der Schaltschwelle ein entsprechendes Signal abgibt, mit Mitteln zur Zeitmessung, die die Zeit zwischen dem Reginn des impulsförmigen Anregungssignales (S1) und dem Zeitpunkt des ersten Überschreitens der Schaltschwelle (S) messen, dadurch gekennzeichnet, daß die Schaltschwelle (S) in Abhängigkeit vom vorherigen Echosignal (S3) verändert wird.

2. Einrichtung zur Abstandsmessung mit Ultraschall,
mit einem Ultraschall- Wandler (10), der als Sender ein impulsförmiges Signal abgibt und als Empfänger das Echosignal eines im zu messenden Abstand befindlichen Reflektors aufnimmt und das Echosignal in ein elektrisches Signal wandelt, das einer Auswerteschaltung mit einem Verstärker mit variabler Verstärkung zugeführt wird, wobei die Auswerteschaltung Mittel zur Zeitmessung umfaßt, die die Zeit zwischen dem Beginn des impulsförmigen Anregungssignales (S1) und dem Zeitpunkt des Eintreffens des Echosignales (S3) messen, dadurch gekennzeichnet, daß der Verstärkungsfaktor (K) des Verstärkers (18) in Abhängigkeit vom Echosignal (S3) verändert wird, daß ein Schwellwertschalter, in dem das elektrische Signal mit einer Schaltschwelle verglichen wird, vorhanden ist, wobei der Schwellwertschalter eine feste Schaltschwelle (S) aufweist und bei Überschreiten der Schaltschwelle (S) ein entsprechendes Signal abgibt, das das Eintreffen des Echosignales erkennen läßt.

3. Einrichtung zur Abstandsmessung mit Ultraschall, mit einem Ultraschall- Wandler (10), der als Sender ein impulsförmiges Signal abgibt und als Empfänger das Echosignal eines im zu messenden Abstand befindlichen Reflektors aufnimmt und das Echosignal in ein elektrisches Signal wandelt, das einer Auswerteschaltung mit einem Verstärker mit variabler Verstärkung zugeführt wird, wobei die Auswerteschaltung Mittel zur Zeitmessung umfaßt, die die Zeit zwischen dem Beginn des impulsförmigen Anregungssignales (S1) und dem Zeitpunkt des Eintreffens des Echosignales (S3) messen, dadurch gekennzeichnet, daß das vom Sender abgegebene Signal in Seiner Stärke veränderbar ist, wobei die Stärke des abgegebenen Signales in Abhängigkeit vom Echosignal (S3) verändert wird, daß ein Schwellwertschalter, in dem das elektrische Signal mit einer Schaltschwelle verglichen wird, vorhanden ist, wobei der Schwellwertschalter eine feste Schaltschwelle (S) aufweist und bei Überschreiten der Schaltschwelle (S) ein entsprechendes Signal abgibt, das das Eintreffen des Echosignales erkennen läßt.

4. Einrichtung nach einem der Ansprüche 1,2 oder 3, dadurch gekennzeichnet, daß die Mittel zur Zeitmessung eine Differenzzeit ($T_d$) ermitteln, die zwischen vorgebbaren Schwellwertüberschreitungen durch das Echosignal liegt und daß in Abhängigkeit von der gemessenen Differenzzeit ($T_d$) die Schaltschwelle (S) oder der Verstärkungsfaktor (K) oder die Intensität des Sendesignales festgelegt wird.

5. Einrichtung nach Anspruch 4, dadurch gekennzeichnet, daß die Festlegung der Differenzzeit ($T_d$) in Abhängigkeit von der Zahl der Überschreitungen der Schaltschwelle (S) durch das Echosignal (S3) erfolgt.

6. Einrichtung nach einem der vorhergehenden Ansprüche, dadurch gekennzeichnet, daß das ausgesandte Signal (S1) nur während der Dauer eines Torimpulses weitergeleitet wird und daß die Länge dieses Torimpulses ($T_T$) in Abhängigkeit vom zuvor registrierten Echosignal (S3) beeinflußt wird, wobei die Wahl der Länge des Torimpulses mit Hilfe einer Recheneinrichtung (14) erfolgt. wird.

7. Einrichtung nach Anspruch 6, dadurch gekennzeichnet, daß der Abstand zwischen zwei Torimpulsen in der Recheneinrichtung (14) durch Simulation ermittelt wird, wobei der Ultraschall- Wandler (10) als ein linear zeitunabhängiges System betrachtet wird.

8. Einrichtung nach Anspruch 7, dadurch gekennzeichnet, daß das Ausgangssignal des Ultraschall-Wandlers (10) aus dem Eingangssignal durch Faltung des Eingangssignales mit der Green'schen Funktion des linear zeitunabhängigen Systems gebildet wird.

**Claims**

1. Device for the measurement of distance with ultrasound, having an ultrasound transducer (10) which, as transmitter, emits a pulse-type signal and, as receiver, picks up the echo signal of a reflector situated at the distance to be measured and converts the echo signal into an electrical signal which is fed to an evaluation circuit, the evaluation circuit comprising at least one threshold-value switch in which the electrical signal is compared with a variable switching threshold, the threshold-value switch emitting an appropriate signal upon transgression of the switching threshold, and having time-measuring means which measure the time between the start of the pulse-type excitation signal (S1) and the instant in time of the first transgression of the switching threshold (S), characterized in that the switching threshold (S) is varied as a function of the preceding echo signal (S3).

2. Device for the measurement of distance with ultrasound, having an ultrasound transducer (10) which, as transmitter, emits a pulse-type signal and, as receiver, picks up the echo signal of a reflector situated at the distance to be measured, and converts the echo signal into an electrical signal which is fed to an evaluation circuit having an amplifier which has variable gain, the evaluation circuit comprising time-measuring means which measure the time between the start of the pulse-type excitation signal (S1) and the instant in time of the arrival of the echo signal (S3), characterized in that the gain factor (K) of the amplifier (18) is varied as a function of the echo signal (S3), and in that a threshold-value switch is present in which the electrical signal is compared with a switching threshold, the threshold-value switch having a fixed switching threshold (S) and, upon transgression of the switching threshold (S), emitting an appropriate signal which permits the arrival of the echo signal to be detected.

3. Device for the measurement of distance with ultrasound, having an ultrasound transducer (10) which, as transmitter, emits a pulse-type signal and, as receiver, picks up the echo signal of a reflector situated at the distance to be measured, and converts the echo signal into an electrical signal which is fed to an evaluation circuit having an amplifier which has variable gain, the evaluation circuit comprising time-measuring means which measure the time between the start of the pulse-type excitation signal (S1) and the instant in time of the arrival of the echo signal (S3), characterized in that the signal emitted by the transmitter can be varied in its strength, the strength of the emitted signal being varied as a function of the echo signal (S3), and in that a threshold-value switch is present in which the electrical signal is compared with a switching threshold, the threshold-value switch having a fixed switching threshold (S) and, upon transgression of the switching threshold (S), emitting an appropriate signal which permits the arrival of the echo signal to be detected.

4. Device according to one of Claims 1, 2 or 3, characterized in that the time-measuring means determine a differential time ($T_d$) which is situated between prescribable threshold-value transgressions by the echo signal, and in that the switching threshold (S) or the gain factor (K) or the intensity of the transmitted signal is fixed as a function of the measured differential time ($T_d$).

5. Device according to Claim 4, characterized in that the differential time ($T_d$) is fixed by the echo signal (S3) as a function of the number of transgressions of the switching threshold (S).

6. Device according to one of the preceding claims, characterized in that the transmitted signal (S1) is relayed only in the course of the duration of a gating pulse, and in that the length of this gating pulse ($T_T$) is influenced as a function of the previously recorded echo signal (S3), the length of the gating pulse being selected with the aid of a computing device (14).

7. Device according to Claim 6, characterized in that the spacing between two gating pulses is determined by simulation in the computing device (14), the ultrasound transducer (10) being regarded as a linear time-independent system.

8. Device according to Claim 7, characterized in that the output signal for the ultrasound transducer (10) is formed from the input signal by convolution of the input signal with the Green function of the linear time-independent system.

## Revendications

1. Installation de télémétrie à ultrasons, comprenant un convertisseur d'ultrasons (10) émettant, comme émetteur, un signal impulsionnel et recevant, comme récepteur, le signal d'écho d'un réflecteur se trouvant à la distance à mesurer, pour convertir le signal d'écho en un signal électrique appliqué à un circuit d'exploitation,

le circuit d'exploitation comprenant au moins un commutateur à seuil qui compare le signal électrique à un seuil de commutation variable, le commutateur à seuil fournissant un signal approprié lors du dépassement du seuil de commutation,
des moyens de mesure de temps étant prévus pour mesurer le temps compris entre le début du signal d'excitation impulsionnel (S1) et l'instant du premier dépassement du seuil de commutation (S),

caractérisée en ce que
le seuil de commutation (S) est modifié en fonction du signal d'écho précédent (S3).

2. Installation de télémétrie à ultrasons, comprenant un convertisseur d'ultrasons (10) qui fournit, comme émetteur, un signal impulsionnel et reçoit, comme récepteur, le signal d'écho d'un réflecteur situé à la distance à mesurer, pour convertir le signal d'écho en un signal électrique appliqué à un circuit d'exploitation à amplificateur à coefficient d'amplification variable, le circuit d'exploitation comprenant des moyens de mesure de temps qui mesurent le temps compris entre le début du signal d'excitation impulsionnel (S1) et l'instant de l'arrivée du signal d'écho (S3),
caractérisée en ce que

- le coefficient d'amplification (K) de l'amplificateur (18) est modifié en fonction du signal d'écho (S3),
- un commutateur à seuil compare le signal électrique à un seuil de commutation,
- le commutateur à seuil a un seuil de commutation fixe (S) et, en cas de dépassement du seuil de commutation (S) il émet un signal correspondant qui signifie l'arrivée du signal d'écho.

3. Installation de télémétrie à ultrasons comprenant un convertisseur d'ultrasons (10) émettant, comme émetteur, un signal impulsionnel et recevant, comme récepteur, le signal d'écho d'un réflecteur situé à la distance à mesurer, pour convertir le signal d'écho en un signal électrique appliqué à un circuit d'exploitation à amplificateur à coefficient d'amplification variable, le circuit d'exploitation comprenant des moyens de mesure de temps pour mesurer le temps compris entre le début du signal d'excitation impulsionnel (S1) et l'instant de l'arrivée du signal d'écho (S3),
caractérisée en ce que

- le signal émis par l'émetteur est d'intensité variable,
- l'intensité du signal émis est modifiée en fonction du signal d'écho (S3),
- un commutateur à seuil compare le signal électrique à un seuil de commutation et ce commutateur à seuil présente un seuil de commutation fixe (S), et
- en cas de dépassement du seuil de commutation (S) il émet un signal correspondant qui traduit l'arrivé du signal d'écho.

4. Installation selon l'une des revendications 1, 2, 3, caractérisée en ce que
les moyens de mesure de temps déterminent une différence de temps $(T_d)$ comprise entre les dépassements de seuil prévisibles par le signal d'écho et, en fonction de la différence de temps mesuré $(T_d)$, on fixe le seuil de commutation (S), ou le coefficient d'amplification (K), ou l'intensité du signal d'émission.

5. Installation selon la revendication 4, caractérisée en ce qu'
on fixe la différence de temps $(T_d)$ suivant le nombre de dépassements du seuil de commutation (S) par le signal d'écho (S3).

6. Installation selon l'une des revendications précédentes, caractérisée en ce que
l'on transmet le signal émis (S1) seulement pendant la durée d'une impulsion de porte, et la durée de cette impulsion de porte $(T_T)$ est influencée en fonction du signal d'écho (S3) enregistré précédemment, le choix de la longueur de l'impulsion de porte se faisant à l'aide d'une installation de calcul (14).

7. Installation selon la revendication 6, caractérisée en ce que
la distance comprise entre deux impulsions de porte dans l'installation de calcul (14) se détermine par simulation, le convertisseur à ultrasons (10) étant assimilé à un système linéaire indépendant du temps.

8. Installation selon la revendication 7,
caractérisée en ce que
le signal de sortie du convertisseur à ultrasons (10) est formé, à partir du signal d'entrée, par convolution du signal d'entrée de la fonction de Green du système linéaire indépendant du temps.

FIG. 1a

FIG. 1b

FIG. 1c

FIG. 1d

FIG. 2

EP 0 571 566 B1

FIG. 3

FIG. 4

CH2:05.0V:500µs
CH1:02.0V:500µs

T3

T1

Nachschwingzeit    Td

Regelung

**FIG. 5**

CH2:05.0V:500µs
CH1:02.0V:500µs

T3

T2

Nachschwingzeit    Td

**FIG. 6**

$U_e(T)$

Ultraschallsensor

als LTI-System

$U_a(T)$

10

23    24

FIG. 7

TR4A: 71.8mV          090.0us

$U_a$ : 050mV : 100μs

FIG. 8b

21μs

$U_e$

t

FIG. 8a

$U_a$

Green - Funktion

t /

FIG. 8c

EP 0 571 566 B1

FIG. 8d

FIG. 8f

FIG. 8e

16

EP 0 571 566 B1

TR4A: 45.5mV          0.203ms

Ua: 050mV : 122µs

**FIG. 8h**

$U_e$

$\tau = 46\mu s$

t

T3  T4

**FIG. 8g**

$U_a$

150

100

$\tau = 46\mu s$

50

0

-50

-100

-150

0   1   2   3   4   5   6   7

t

**FIG. 8i**